# EUROPÄISCHE PATENTSCHRIFT

(11) **EP 3 906 769 B1**
(45) Veröffentlichungstag und Bekanntmachung des Hinweises auf die Patenterteilung: **24.05.2023**
(21) Anmeldenummer: 21156516.3
(22) Anmeldetag: 11.02.2021
(51) Int. Cl.: A01D 41/14, A01D 69/00, A01F 12/56, A01D 43/08

(54) **ANTRIEBSSYSTEM FÜR EINE SELBSTFAHRENDE ERNTEMASCHINE**
DRIVE SYSTEM FOR A SELF-PROPELLED HARVESTING MACHINE
SYSTÈME D'ENTRAÎNEMENT POUR UN ENGIN D'ABATTAGE-FAÇONNAGE AUTONOME

(30) Priorität: 04.05.2020 DE 102020111992
(43) Veröffentlichungstag der Anmeldung: 10.11.2021
(73) Patentinhaber: CLAAS Selbstfahrende Erntemaschinen GmbH, 33428 Harsewinkel (DE)
(72) Erfinder: Schiewer, Stefan, 48231 Warendorf (DE); Poppenborg,, Maik, 33428 Marienfeld (DE); Lütkeschümer, Malte, 49080 Osnabrück (DE); Graute, Mathias, 48161 Münster (DE); Rohde, Marcel, 33428 Harsewinkel (DE)
(74) Vertreter: CLAAS Gruppe

(56) Entgegenhaltungen:
- DE-A1-102006 030 971
- DE-A1-102009 028 094
- DE-A1-102014 108 026

## Beschreibung

Die vorliegende Erfindung betrifft ein Antriebssystem für eine selbstfahrende Erntemaschine gemäß dem Oberbegriff des Anspruches 1. Weiterhin betrifft die Erfindung eine selbstfahrende Erntemaschine gemäß dem Anspruch 15.

Aus der DE 10 2014 108 026 A1 ist ein Antriebssystem für eine selbstfahrende Erntemaschine gemäß dem Oberbegriff des Anspruches 1 bekannt. Das Antriebssystem umfasst einen Antriebsmotor, ein von dem Antriebsmotor angetriebenes Verteilergetriebe mit einer an einer Antriebswelle des Verteilergetriebes angeordneten Abtriebsriemenscheibe, welche mittels eines Hauptantriebsriemens zumindest eine endseitig auf einer Messertrommelwelle angeordnete Hauptriemenscheibe einer rotierenden Messertrommel antreibt, und mindestens eine von dem Antriebsmotor angetriebene Hydraulikpumpe zum Antrieb eines Vorsatzgerätes und einer Einzugsvorrichtung. Dem Verteilergetriebe ist eine zweite Abtriebsriemenscheibe zugeordnet, die mittels des zweiten Riemens die mindestens eine Hydraulikpumpe antreibt. Die zweite Abtriebsriemenscheibe zum Antreiben der Hydraulikpumpe ist parallel zu der ersten Abtriebsriemenscheibe des Verteilergetriebes angeordnet ist. Der Hauptantriebsriemen und der zweite Riemen verlaufen parallel zueinander auf einer gemeinsamen Seiten des Antriebssystems. Weiterhin sind zum Antreiben von Vorsatzgerät und Einzugsvorrichtung Gelenkwellen parallel neben dem Hauptantriebsriemen auf der gleichen Seite des Antriebssystems angeordnet. Die gemäß der DE 10 2014 108 026 A1 bekannte Anordnung der leistungsübertragenden Baugruppen beschränkt die Arbeitsbreite der gutbearbeitenden Arbeitsorgane, d.h. insbesondere der Einzugsvorrichtung mit ihren Vorpresswalzen und Einzugswalzen sowie der nachgeordneten Messertrommel. Dies hat zur Folge, dass für die Elemente des Antriebssystems in der Breite der Erntemaschine weniger Bauraum zur Verfügung steht, da die Maschinenbreite aufgrund von Straßenverkehrsvorschriften nicht weiter erhöht werden kann.

Ein gattungsgemäßes Antriebssystem nach dem Oberbegriff des Anspruchs 1 ist aus DE 10 2006 030971 A1 bekannt.

Der Erfindung liegt somit die Aufgabe zu Grunde, ein Antriebssystem der eingangs genannten Art derart weiterzubilden, dass das Antriebssystem kompakter aufgebaut ist und dabei zum Antreiben verschiedenster Vorsatzgeräte in unterschiedlichen Betriebsmodi einschließlich einer Reversierfunktion eingerichtet ist.

Diese Aufgabe wird durch ein Antriebssystem gemäß dem Oberbegriff des Anspruches 1 in Verbindung mit den kennzeichnenden Merkmalen gelöst. Vorteilhafte Weiterbildungen sind Gegenstand der von Anspruch 1 anhängigen Unteransprüche. Weiterhin wird die Aufgabe durch eine selbstfahrende Erntemaschine gemäß den Merkmalen des Anspruches 15 gelöst.

Gemäß dem Anspruch 1 wird ein Antriebssystem für eine selbstfahrende Erntemaschine vorgeschlagen, wobei das Antriebssystem einen Antriebsmotor, ein von dem Antriebsmotor angetriebenes Verteilergetriebe mit einer an einer Antriebswelle des Verteilergetriebes angeordneten ersten Abtriebsriemenscheibe, welche mittels eines Hauptantriebsriemens zumindest eine endseitig auf einer Messertrommelwelle angeordnete Hauptriemenscheibe einer rotierenden Messertrommel antreibt, und mindestens eine von dem Antriebsmotor angetriebene Hydraulikpumpe zum hydraulischen Antreiben eines Vorsatzgerätes und/oder einer Einzugsvorrichtung umfasst. Erfindungsgemäß ist vorgesehen, dass der Messertrommelwelle auf der der Hauptriemenscheibe gegenüberliegenden Seite endseitig eine Getriebe-Kupplungseinheit zugeordnet ist, wobei die Getriebe-Kupplungseinheit dazu eingerichtet ist, das Vorsatzgerät stufenlos oder mit diskreter Übersetzung anzutreiben, wobei die Getriebe-Kupplungseinheit eine achsparallel zur Messertrommelwelle verlaufende Querwelle antreibt, und die Querwelle mit einer auf der Seite der Hauptriemenscheibe befindlichen Kuppeleinrichtung für den Antrieb des Vorsatzgerätes trieblich verbunden ist. Durch ein derart aufgelöstes Antriebssystem wird der erforderliche Bauraumbedarf reduziert, so dass die Arbeitsbreite der gutbearbeitenden Arbeitsorgane vergrößert werden kann. Der Antriebsmotor kann mit dem Verteilergetriebe und dem Hauptantriebsriemen einen Hauptantriebsstrang des Antriebssystems bilden. In einer ersten Schaltstellung der Getriebe-Kupplungseinheit kann der Antrieb des Vorsatzgerätes rein hydraulisch stufenlos erfolgen. In einer zweiten Schaltstellung der Getriebe-Kupplungseinheit kann der Antrieb des Vorsatzgerätes leistungssummiert mit diskreter Übersetzung erfolgen, d.h. hydraulisch und zusätzlich mechanisch über die Messertrommelwelle.

Insbesondere kann die Getriebe-Kupplungseinheit durch zumindest einen Hydraulikmotor angetrieben sein, welcher durch die mindestens eine Hydraulikpumpe antreibbar ist.

Die mindestens eine Hydraulikpumpe ist mit dem von Antriebsmotor, Verteilergetriebe und dem Hauptantriebsriemen gebildeten Hauptantriebsstrang des Antriebssystems verbunden. Die mindestens eine Hydraulikpumpe ist somit permanent mit dem Hauptantrieb verbunden. Dadurch kann ein Abbremsen des Hauptantriebsstranges und der von diesem angetriebenen Arbeitsorganen erreicht werden. Das hydraulische Antreiben der Getriebe-Kupplungseinheit durch den zumindest einen Hydraulikmotor ermöglicht einen stufenlosen Antrieb des Vorsatzgerätes mit veränderlicher Drehzahl.

Dazu kann die Getriebe-Kupplungseinheit eine Getriebeanordnung sowie eine Antriebsriemenscheibe mit einer in die Antriebsriemenscheibe integrierten Kupplung aufweisen. Mit der Getriebeanordnung kann die Drehzahl des zumindest einen Hydraulikmotors so übersetzt bzw. eingestellt werden, dass der Hydraulikmotor in einem effizienten Betriebsbereich arbeitet. Die Antriebsriemenscheibe kann bevorzugt als Keilriemenscheibe ausgeführt sein.

Bevorzugt kann die Getriebeanordnung als Stirnradgetriebe und/oder Stirnradwinkelgetriebe und die Kupplung als Reibkupplung oder als formschlüssige Kupplung ausgeführt sein. Bei der als Reibkupplung ausgeführten Kupplung der Getriebe-Kupplungseinheit handelt es sich vorzugsweise sich um eine trockenlaufende Einscheibenkupplungslamelle. Die Kupplung kann dabei einen ersten Kupplungsteil, welcher mit der Messertrommelwelle kraftschlüssig verbunden ist, und einen gegenüber der Messertrommelwelle relativbeweglichen zweiten Kupplungsteil aufweisen, welcher mit der Antriebsriemenscheibe kraftschlüssig in Eingriff bringbar ist. Die bevorzugt als Reibkupplung oder alternativ als formschlüssige Kupplung ausgeführte Kupplung wird dabei im leistungssummierten Betriebspunkt, in dem für das Vorsatzgerät viel Antriebsleistung bei konstanter Drehzahl benötigt wird, eingekuppelt. Vorteilhaft ist dabei, dass der Schaltvorgang der als Reibkupplung ausgeführten Kupplung sich gegenüber dem Stand der Technik durch einen geringen Verschleiß sowie geringere Geräuschemission auszeichnet.

Insbesondere kann die Getriebeanordnung auf der Messertrommelwelle drehbar gelagert sein. Durch das drehbare Lagern der Getriebeanordnung auf der Messertrommelwelle wird das Auftreten einer Winkel- oder Längenänderung beim Verschwenken des Vorsatzgerätes vermieden, welche ansonsten in Schlauchleitungen oder einer Gelenkwelle aufgenommen werden müssten.

Vorteilhaft ist, dass der zumindest eine Hydraulikmotor durch ein Doppelgelenk mit der Getriebeanordnung verbunden sein kann. Das Doppelgelenk verbindet den zumindest einen Hydraulikmotor mit dem Eingang der Getriebeanordnung der Getriebe-Kupplungseinheit. Der Ausgang der Getriebeanordnung treibt die Antriebsriemenscheibe an. Der Wartungsaufwand kann durch ein, insbesondere wartungsfrei ausgeführtes, Doppelgelenk verringert werden. Insbesondere kann durch die Verwendung des Doppelgelenks beim Einbau und Ausbau der Getriebeanordnung das Trennen von Hydraulikleitungen und das Trennen des Hydraulikmotors vermieden werden. Der Hydraulikmotor kann jedoch auch unmittelbar an die Getriebeanordnung angeflanscht sein.

Weiterhin kann auf der Querwelle endseitig eine Abtriebsriemenscheibe angeordnet sein, welche durch einen Riemen mit der Antriebsriemenscheibe der Getriebe-Kupplungseinheit trieblich verbunden ist.

Dabei kann der Riemen durch eine Spannvorrichtung mit veränderbarer Spannung vorgespannt sein.

Insbesondere kann die Spannvorrichtung eine mittels eines Aktors, insbesondere eines Hydraulikzylinders, mit einer Kraft beaufschlagbare Spannrolle umfassen. Die Beaufschlagung der Spannrolle kann auch rein mechanisch durch eine als Feder ausgeführten Aktor oder einen pneumatisch betätigbaren Zylinder erfolgen.

In bevorzugter Weiterbildung können die Querwelle und die Kuppeleinrichtung durch ein auf der Seite der Hauptriemenscheibe befindliches Eingangsgetriebe miteinander verbunden sein. Dadurch können das von der Querwelle übertragene Drehmoment bzw. die Drehzahl angepasst werden, bevor diese von der Kuppeleinrichtung auf das Vorsatzgerät übertragen werden. Das Eingangsgetriebe kann bevorzugt eine Kegelradstufe aufweisen.

Die Getriebe-Kupplungseinheit ist in einem drehzahlvariablen Modus betreibbar, in welchem die Kupplung geöffnet ist, so dass der Antrieb des Vorsatzgerätes durch den zumindest einen Hydraulikmotor erfolgt. Hierdurch wird ein drehzahlvariabler Antrieb des Vorsatzgerätes ermöglicht.

Des Weiteren ist die Getriebe-Kupplungseinheit in einem leistungssummierten Modus betreibbar, in welchem die Kupplung geschlossen ist, so dass der Antrieb des Vorsatzgerätes mechanisch mittels der Messertrommelwelle und durch den zumindest einen Hydraulikmotor erfolgt. Dabei kann die vom Hydraulikmotor abgegebene Leistung minimiert werden, um die Verlustleistung zu reduzieren. Denkbar ist es aber auch, für einen rein mechanischen Antrieb des Vorsatzgerätes mit konstanter Drehzahl bei geschlossener Kupplung der Getriebe-Kupplungseinheit den Hydraulikmotor von der Getriebe-Kupplungseinheit zu entkoppeln.

Weiterhin ist die Getriebe-Kupplungseinheit in einem Reversiermodus betreibbar, in welchem die Kupplung geöffnet und die Drehrichtung des zumindest einen Hydraulikmotor invertiert ist. Auf diese Weise lassen sich Probleme im Gutfluss innerhalb der Einzugsvorrichtung und/oder des Vorsatzgerätes beheben, in dem diese reversierend angetrieben werden.

Dabei kann der Hydraulikzylinder der Spannvorrichtung im drehzahlvariablen Modus und im leistungssummierten Modus mit einem ersten Druck beaufschlagt sein, während der Hydraulikzylinder im Reversiermodus oder während eines Bremsvorganges, in welchen am Antriebsriemen Leertrum und Lasttrum wechseln, mit einem zweiten Druck beaufschlagt ist, der größer als der erste Druck ist. Um im Reversiermodus oder während eines Bremsvorganges ein Drehmoment übertragen zu können, muss sichergestellt werden, dass die Spannrolle der Spannvorrichtung durch den die Getriebe-Kupplungseinheit mit der Abtriebsriemenscheibe der Querwelle verbindenden Riemen nicht nach oben gedrückt werden kann.

Zum Antreiben der Einzugsvorrichtung bilden ein Hydraulikmotor sowie ein sich daran anschließendes Getriebe und Gelenkwellen einen separaten Antriebsstrang, der oberhalb des Hauptantriebsriemens und parallel zu diesem in einer vertikalen Ebene liegend angeordnet ist. Die Anordnung des Hydraulikmotors, des Getriebes sowie der Gelenkwellen erfolgt im Wesentlichen innerhalb der Riemenbreite des Hauptantriebsriemens und verläuft oberhalb des Hauptriemens. Dadurch wird bezogen auf die Gesamtbreite der Erntemaschine bzw. des Feldhäckslers Bauraum frei, welcher der Verbreiterung der Arbeitsbreite der Arbeitsorgane zukommt.

Weiterhin wird die eingangs gestellte Aufgabe durch eine selbstfahrende Erntemaschine, insbesondere einen Feldhäcksler, mit einem Antriebssystem nach einem der Ansprüche 1 bis 14 gelöst.

Die selbstfahrende Erntemaschine kann alle im Zusammenhang mit dem erfindungsgemäßen Antriebssystem beschriebenen Merkmale einzeln oder in Kombination aufweisen.

Die vorliegende Erfindung wird nachstehend anhand eines in den Zeichnungen dargestellten Ausführungsbeispieles näher erläutert.

Es zeigen:
- Fig. 1: eine schematische Ansicht einer als Feldhäcksler ausgeführten selbstfahrenden Erntemaschine;
- Fig. 2: eine schematisierte perspektivische Ansicht eines Antriebssystems für eine selbstfahrende Erntemaschine;
- Fig. 3: ein vereinfachtes Antriebsschema des Antriebssystems; und
- Fig. 4: schematisch eine perspektivische Ansicht einer Einzugsvorrichtung mit einer daran angeordneten Kupplungs-Getriebeeinheit.

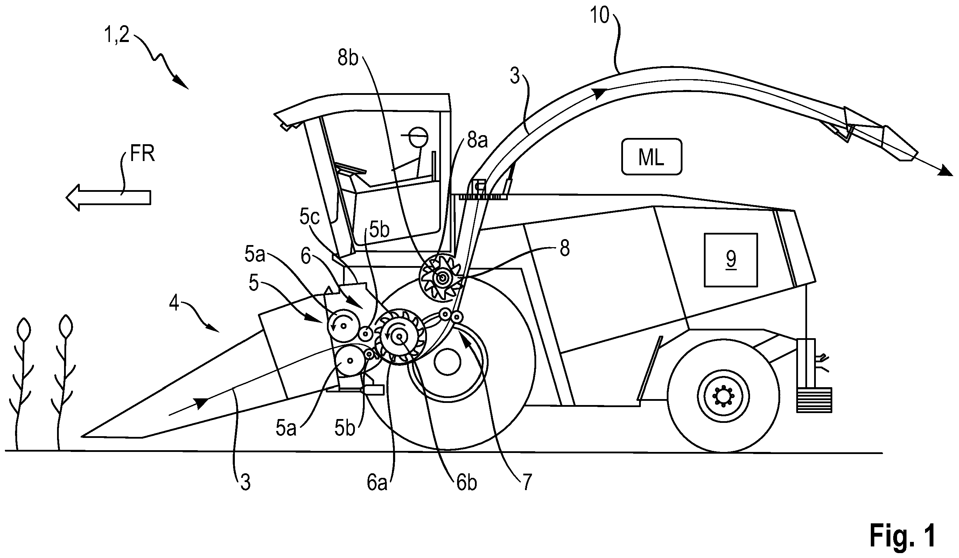

In Fig. 1 ist eine schematische Ansicht einer als Feldhäcksler 2 ausgeführten selbstfahrenden Erntemaschine 1 dargestellt. Die schematische Darstellung zeigt in Fahrtrichtung FR gesehen eine als linke Maschinenseite ML bezeichnete Ansicht der Erntemaschine 1. Die gegenüberliegende Seite wird entsprechend als rechte Maschinenseite MR bezeichnet.

Der Feldhäcksler 2 erntet beziehungsweise nimmt mittels eines Vorsatzgerätes 4 Pflanzen vom Feld auf, um anschließend das aufgenommene Erntegut 3 in Form eines Erntegutstroms (in Fig. 1 als mit Pfeilen versehene Linie angedeutet) durch Arbeitsorgane, die als Bearbeitungs- und Förderorgane des Feldhäckslers 2 ausgeführt sind, zuzuführen und mittels einer Überladeeinrichtung in einen - nicht dargestellten - Ladebehälter abzuwerfen. Die Bearbeitungs- und Förderorgane des Feldhäckslers 2 umfassen unter anderem eine Einzugsvorrichtung 5, eine Häckselvorrichtung 6, eine optionale Konditioniereinrichtung 7 sowie einen Auswurfbeschleuniger 8.

Die Einzugsvorrichtung 5 besteht aus mehreren, in einem Einzugsgehäuse 5c hintereinander angeordneten angetriebenen Walzenpaaren 5a, 5b. Das Vorsatzgerät 4 ist an die Einzugsvorrichtung 5 ankoppelbar. Die Häckselvorrichtung 6 umfasst eine rotierende, mit Messern ausgestatteten Messertrommel 6a mittels der das aufgenommene Erntegut 3 in Zusammenwirkung mit einer Gegenschneide zerkleinert wird. Die Messertrommel 6a ist auf einer angetriebenen Messertrommelwelle 6b angeordnet. Der Häckselvorrichtung 6 ist in einem Förderschacht in Gutstromförderrichtung nachgelagert die optionale Konditioniereinrichtung 7 angeordnet, die bei Bedarf aus dem Erntegutstrom entfernbar ist. Der Konditioniereinrichtung 7 im Förderschacht ist in Gutstromförderrichtung der Auswurfbeschleuniger 8 nachgelagert, welcher das Erntegut 3 mittels rotierender Wurfpaddel für den sicheren Auswurf durch die als Auswurfkrümmer ausgeführte Überladeeinrichtung 10 beschleunigt. Der Auswurfbeschleuniger 8 umfasst auf einer Welle 8b drehfest angeordnete Förderelemente 8a. Im rückwärtigen Bereich des Feldhäckslers 2 ist ein als Verbrennungsmotor ausgeführter Antriebsmotor 9 als Hauptantriebsaggregat angeordnet.

Als an die Einzugsvorrichtung 5 ankoppelbare Vorsatzgerät 4 kommen unterschiedliche Vorsatzgerätetypen zum Einsatz, die in Abhängigkeit von der zu verarbeitenden Erntegutart ausgewählt werden. Beispielsweise wird zur Aufnahme von in Schwaden abgelegtem Erntegut eine so genannte Pick-up am Feldhäcksler 2 verwendet. Für das Ernten von Ganzpflanzen kommt hingegen ein Scheibenmähwerk zum Einsatz. Beim Ernten von Mais wird ein reihenunabhängig arbeitendes Maisgebiss oder ein reihenabhängig arbeitender Maispflücker an die Einzugsvorrichtung 5 des Feldhäckslers 2 angekoppelt.

Die vorgenannten, nicht abschließend aufgezählten Vorsatzgeräte 4 unterscheiden sich hinsichtlich ihres Antriebes durch unterschiedliche Betriebsspezifikationen. So bedürfen beispielsweise das Maisgebiss oder die Pick-up einer variablen Antriebsdrehzahl, während das Scheibenmähwerk mit einer konstanten Antriebsdrehzahl arbeitet. Des Weiteren ist die Leistungsaufnahme des Scheibenmähwerkes höher als die der Pick-up oder des Maisgebisses.

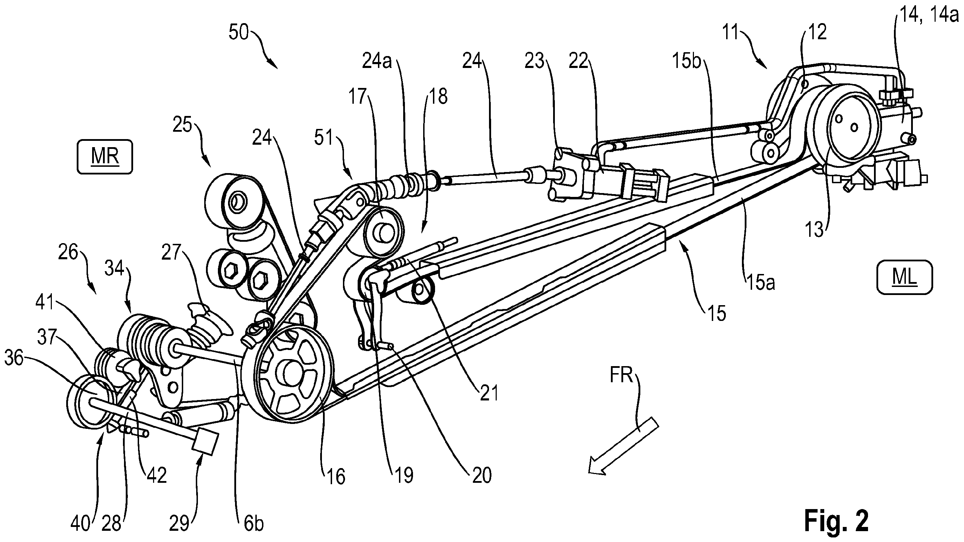

In Fig. 2 ist eine schematisierte perspektivische Ansicht eines erfindungsgemäßen Antriebssystems 50 des als Feldhäcksler 2 ausgeführten Erntemaschine 1 dargestellt. Die Darstellung zeigt lediglich die Komponenten des Antriebssystems 50, welche der Kraftübertragung zu den verschiedenen Arbeitsorganen, dem Vorsatzgerät 4, der Einzugsvorrichtung 5, der Häckselvorrichtung 6, der optionalen Konditioniereinrichtung 7 sowie dem Auswurfbeschleuniger 8, dienen. Die sich im Wesentlichen in Längsrichtung erstreckenden Antriebskomponenten der Einzugsvorrichtung 5, der Häckselvorrichtung 6 sowie des Auswurfbeschleunigers 8 sind auf der linken Maschinenseite ML angeordnet. Die sich im Wesentlichen in Längsrichtung erstreckenden Antriebskomponenten des Vorsatzgerätes 4 sowie der optionalen Konditioniereinrichtung 7 sind diesen gegenüberliegend auf der rechten Maschinenseite ML angeordnet. Die unter anderem in Fig. 2 nicht dargestellte Einzugsvorrichtung 5, Häckselvorrichtung 6, Konditioniereinrichtung 7 sowie der Auswurfbeschleuniger 8 beabstanden die Antriebskomponenten in Querrichtung des Feldhäckslers 2 zueinander. Die vorstehend beschriebene Anordnung der Komponenten des Antriebssystems 50 kann entsprechen auch spiegelbildlich vorgesehen sein.

Der Antriebsmotor 9 treibt über eine - nicht dargestellte - Motorwelle ein auf der linken Maschinenseite ML angeordnetes Verteilergetriebe 11 an. Das Verteilergetriebe 11 umfasst eine auf einer ersten Antriebswelle angeordnete Abtriebsriemenscheibe 12, welche durch eine hydraulisch betätigbare Kupplung 13 mit der Motorwelle des Antriebsmotors 9 schaltbar verbunden ist. Weiterhin ist an einer zweiten Antriebswelle des Verteilergetriebes 11 zumindest eine Hydraulikpumpe 14 unmittelbar an das Verteilergetriebe 11 angeschlossen.

Durch die Abtriebsriemenscheibe 12 wird mittels eines Hauptantriebsriemens 15 zumindest eine endseitig auf der Messertrommelwelle 6b angeordnete Hauptriemenscheibe 16 angetrieben. Mit 15a ist die Unterseite und mit 15b die Oberseite des Hauptantriebsriemens 15 bezeichnet. Im regulären Betrieb bildet die Unterseite 15a den Lasttrum oder ziehenden Trum und die Oberseite 15b den Leertrum oder gezogenen Trum. Der Hauptantriebsriemen 15 treibt über eine an der Welle 8b angeordnete Riemenscheibe 17 den Auswurfbeschleuniger 8 an. Die Oberseite 15b des Hauptantriebsriemens 15 wird durch eine Spannvorrichtung 18, die eine um eine Achse 20 schwenkbare Spannrolle 19 sowie einen Hydraulikzylinder 21 umfasst, mit einer einstellbaren Spannung beaufschlagt.

Weiterhin ist auf der linken Maschinenseite ML ein Hydraulikmotor 22 angeordnet. Der Hydraulikmotor 22 ist oberhalb des Hauptantriebsriemens 15 und im Wesentlichen parallel zu diesem in einer vertikalen Ebene liegend angeordnet. Der Hydraulikmotor 22 wird von der zumindest einen Hydraulikpumpe 14 angetrieben. Eine Antriebswelle des Hydraulikmotors 22 treibt ein Getriebe 23 an, welches über Gelenkwellen 24 mit der anzutreibenden Einzugsvorrichtung 5 verbunden ist. Zwischen den Gelenkwellen 24 kann zusätzlich ein Getriebe 24a angeordnet sein. Der Hydraulikmotor 22 sowie das sich daran anschließende Getriebe 23 und die Gelenkwellen 24 bilden einen separaten Antriebsstrang 51 zum Antreiben der Einzugsvorrichtung 5. Der Antriebsstrang 51 ist oberhalb des Hauptantriebsriemens und im Wesentlichen parallel zu diesem in einer vertikalen Ebene liegend angeordnet. Dabei kann der Antriebsstrang 51 von einer exakt parallelen und nur in einer vertikalen Ebene liegenden Anordnung abweichend angeordnet sein. So kann der Antriebsstrang 51 auch einen zusätzlichen Winkel quer zur Fahrtrichtung FR enthalten. Die Gelenkwellen 24 sowie das zwischen diesen angeordnete Getriebe 24a sind somit ebenfalls im Wesentlichen parallel zum Hauptantriebsriemen 15 und in im Wesentlichen einer vertikalen Ebene zu diesem liegend angeordnet. Die Anordnung des separaten Antriebsstranges 51 aus Hydraulikmotor 22, Getriebe 23 sowie zumindest den Gelenkwellen 24 erfolgt im Wesentlichen innerhalb der Riemenbreite des Hauptantriebsriemens 15 und verläuft oberhalb des Hauptriemens 15. Dadurch wird bezogen auf die Gesamtbreite der Erntemaschine 1 bzw. des Feldhäckslers 2 Bauraum frei, welcher der Vergrößerung der Arbeitsbreite der Arbeitsorgane zu Gute kommt.

Auf der gegenüberliegenden rechten Maschinenseite MR sind Komponenten des Antriebssystem 50 angeordnet, mit denen das Vorsatzgerät 4 sowie die Konditioniereinrichtung 7 angetrieben werden. Zum Antrieb der Konditioniereinrichtung 7 ist ein Riementrieb 25 vorgesehen, der - nicht dargestellt - trieblich mit dem Auswurfbeschleuniger 8 verbunden ist. Zum Antreiben des Vorsatzgerätes 4 ist auf der rechten Maschinenseite MR eine Getriebe-Kupplungseinheit 26 angeordnet. Die Getriebe-Kupplungseinheit 26 ist durch zumindest einen Hydraulikmotor 27 angetrieben ist, welcher durch eine weitere, unmittelbar an das Verteilergetriebe 11 angeschlossene Hydraulikpumpe 14a antreibbar ist. Die Getriebe-Kupplungseinheit 26 ist zudem durch die Messertrommelwelle 6b antreibbar. Dabei ist die Getriebe-Kupplungseinheit 26 bevorzugt auf der Messertrommelmotorwelle 6b gelagert. Die Getriebe-Kupplungseinheit 26 treibt eine achsparallel zur Messertrommelwelle 6b verlaufende Querwelle 28 an. Die Querwelle 28 ist mit einer auf der Seite der Hauptriemenscheibe 16, d.h. linken Maschinenseite ML, befindlichen Kuppeleinrichtung 29 für den Antrieb des Vorsatzgerätes 4 trieblich verbunden. Die Querwelle 28 verläuft durch das Einzugsgehäuse 5c der Einzugsvorrichtung 5.

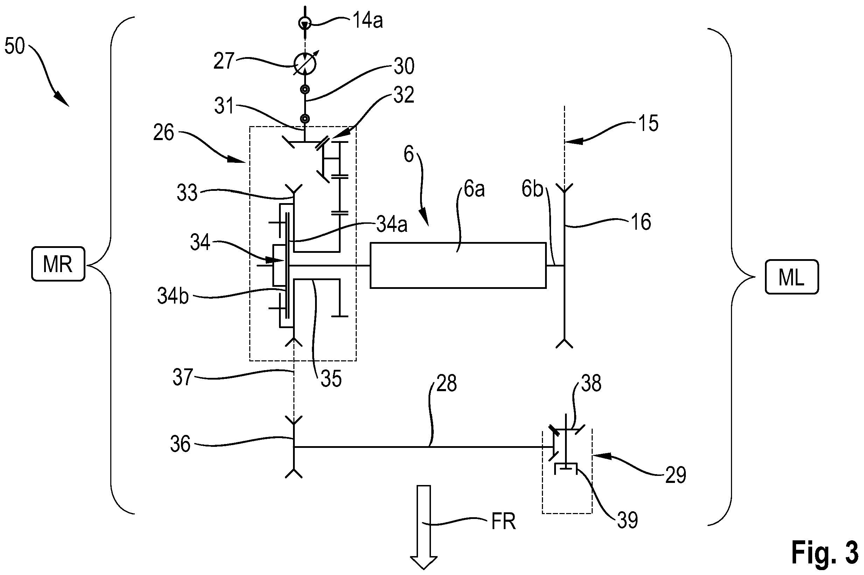

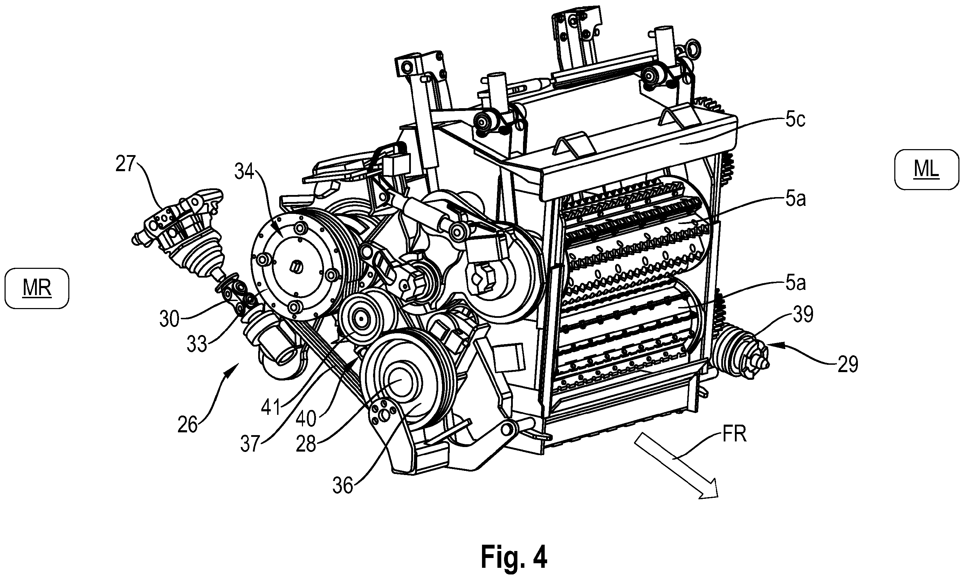

Der Aufbau und die Funktionsweise der Getriebe-Kupplungseinheit 26 wird nachfolgend anhand der Fig. 3 und Fig. 4 näher erläutert.

Die Darstellung in Fig. 3 zeigt ein vereinfachtes Antriebsschema des Antriebssystems 50. Das vereinfachte Antriebsschema zeigt dabei lediglich die für den Antrieb des Vorsatzgerätes 4 notwendigen Komponenten. Die Getriebe-Kupplungseinheit 26 ist dazu eingerichtet, das Vorsatzgerät 4 stufenlos hydraulisch oder mit diskreter Übersetzung leistungssummiert anzutreiben. Der von der Hydraulikpumpe 14a angetriebene Hydraulikmotor 27 kann durch ein Doppelgelenk 30 mit einer Eingangswelle 31 der Getriebe-Kupplungseinheit 26 verbunden sein. Die Getriebe-Kupplungseinheit 26 weist eine Getriebeanordnung 32 sowie eine Antriebsriemenscheibe 33 mit einer, insbesondere in die Antriebsriemenscheibe 33 integrierten, Kupplung 34 auf. Die Getriebeanordnung 32 ist als Stirnradwinkelgetriebe ausgeführt. Mit der Getriebeanordnung 32 wird die Drehzahl des Hydraulikmotors 27 so übersetzt bzw. eingestellt, dass der Hydraulikmotor 27 in einem effizienten Betriebsbereich arbeitet.

Der Hydraulikmotor 27 treibt mittels der Eingangswelle 31 die Getriebeanordnung 32 an. Auf einer Ausgangswelle 35 der Getriebeanordnung 32 ist die die Antriebsriemenscheibe 33 mit der darin integrierten Kupplung 34 angeordnet. Die Getriebeanordnung 32 ist auf der Messertrommelwelle 6b gelagert. Hierzu ist die Ausgangswelle 35 relativ zur Messertrommelwelle 6b drehbeweglich auf dieser gelagert. Da die Getriebeanordnung 32 auf der Messertrommelwelle 6b drehbar gelagert ist, entsteht keine Winkel- oder Längenänderung beim Verschwenken des Vorsatzgerätes 4, welche üblicherweise von Schlauchleitungen oder einer Gelenkwelle aufgenommen werden müssten.

Die als Reibkupplung ausgeführte Kupplung 34 weist einen ersten Kupplungsteil 34a, welcher mit der Messertrommelwelle 6b formschlüssig verbunden ist, und einen gegenüber der Messertrommelwelle 6b relativbeweglichen zweiten Kupplungsteil 34b auf, welcher mit der Antriebsriemenscheibe 33 formschlüssig verbunden ist. Die beiden Kupplungsteile 34a, 34b lassen sich durch eine Beaufschlagung mit einem hydraulischen Druck betätigen, um diese miteinander reibschlüssig zu verbinden. Die als Reibkupplung ausgeführte Kupplung 34 hat den Vorteil, dass sie geräuscharm und verschleißarm arbeitet. Bei der als Reibkupplung ausgeführten Kupplung 34 kann es sich um eine trockenlaufende Einscheibenkupplungslamelle handeln. Anstelle der hydraulisch betätigen Kupplung 34 ist auch die Verwendung einer pneumatisch oder elektromechanisch betätigbaren Kupplung denkbar.

Auf der Querwelle 28 ist an ihrem Wellenende auf der rechten Maschinenseite MR endseitig eine Abtriebsriemenscheibe 36 angeordnet ist, welche durch einen Riemen 37 mit der Antriebsriemenscheibe 33 der Getriebe-Kupplungseinheit 26 verbunden ist. Der Riemen 37 ist durch eine Spannvorrichtung 40 mit veränderbarer Spannung vorgespannt. Hierzu umfasst die Spannvorrichtung 40 eine mittels eines Hydraulikzylinders 42 mit einer Kraft beaufschlagbare Spannrolle 41, welche gegen den Riemen 37 gedrückt wird.

Am gegenüberliegenden Wellenende der Querwelle 28 auf der linken Maschinenseite ML ist die Kuppeleinrichtung 29 angeordnet. Die Kuppeleinrichtung 29 umfasst ein Eingangsgetriebe 38 mit einer Kegelradstufe sowie einen Schnellkuppler 39, an den das Vorsatzgerät 4 zum Antreiben desselben angeschlossen wird. Das auf der Seite der Hauptriemenscheibe 16, d.h. der linken Maschinenseite ML befindliche Eingangsgetriebe 38 verbindet die Querwelle 28 mit dem Schnellkuppler 39 der Kuppeleinrichtung 29.

Für den stufenlosen Antrieb des Vorsatzgerätes 4 befindet sich die hydraulisch betätigbar Kupplung 34 in einer Schaltstellung, in der die beiden Kupplungsteile 34a, 34b außer Eingriff stehen, d.h. die Kupplung 34 geöffnet ist. Bei geöffneter Kupplung 34 ist die Getriebe-Kupplungseinheit 26 in einem drehzahlvariablen Modus betreibbar, so dass der Antrieb des Vorsatzgerätes 4 durch den zumindest einen Hydraulikmotor 27 erfolgt. Durch eine Ansteuerung der Drehzahl der von dem zumindest einen Hydraulikmotor 27 abgegeben Drehzahl lässt sich das Vorsatzgerät 4 drehzahlvariabel antreiben.

Um die Getriebe-Kupplungseinheit 26 in einem leistungssummierten Modus zu betreiben, wird die Kupplung 34 geschlossen. Dadurch stehen die beiden Kupplungsteile 34a, 34b kraftschlüssig miteinander in Eingriff, so dass der Antrieb des Vorsatzgerätes 4 mechanisch mittels der durch den Hauptantriebsriemen 15 angetriebenen Messertrommelwelle 6b und durch den zumindest einen Hydraulikmotor 27 erfolgt. Dabei kann Die kann die von dem Hydraulikmotor 27 abgegebene Leistung minimiert werden, um die Verlustleistung zu reduzieren. Der leistungssummierte Betrieb kann für alle Arten von Vorsatzgeräten genutzt werden. Insbesondere wird der leistungssummierte Betrieb für als Maispflücker oder Direktschneidwerke ausgeführte Vorsatzgeräte 4 genutzt, da die Drehzahl in dieser Betriebsart konstant ist.

Des Weiteren ist die Getriebe-Kupplungseinheit 26 in einem Reversiermodus betreibbar, in welchem die Kupplung 34 geöffnet und die Drehrichtung des zumindest einen Hydraulikmotor 27 invertiert ist. Auf diese Weise lassen sich Probleme im Gutfluss innerhalb der Einzugsvorrichtung 5 und/oder des Vorsatzgerätes 4 beheben, in dem diese reversierend angetrieben werden. Dazu wird auch die Drehrichtung des Hydraulikmotors 22, der die Einzugsvorrichtung 5 antreibt, invertiert. Das Invertieren der Drehrichtungen der beiden Hydraulikmotoren 22 und 27 erfolgt unabhängig voneinander. Somit lassen sich die Einzugsvorrichtung 5 und das Vorsatzgerätes 4 unabhängig voneinander auch einzeln reversieren.

Das Bremsen und Beschleunigen des Vorsatzgerätes 4 kann hydraulisch realisiert werden, wobei die Kupplung 34 dabei geöffnet ist. Zumindest eine der Hydraulikpumpen 14, 14a ist mit dem durch den Antriebsmotor 9, das Verteilergetriebe 11 und den Hauptantriebsriemen 15 gebildeten Hauptantriebsstrang verbunden und kann zum Abbremsen verwendet werden. Durch das Öffnen der Kupplung 13 wird der Antriebsstrang zwischen dem Antriebsmotor 9 und dem Verteilergetriebe 11 unterbrochen. Die vom Hauptantriebsriemen 15 auf das Verteilergetriebe 11 übertragene Leistung der noch rotierenden Arbeitsorgane wird von zumindest einer der Hydraulikpumpen 14, 14a aufgenommen, so dass die Arbeitsorgane innerhalb von Sekunden zum Stillstand kommen.

Der Hydraulikzylinder 42 der Spannvorrichtung 40 ist im drehzahlvariablen Modus sowie im leistungssummierten Modus der Getriebe-Kupplungseinheit 26 mit einem ersten Druck beaufschlagt, während der Hydraulikzylinder 42 im Reversiermodus oder während eines Bremsvorganges, in welchen am Riemen 37 Leertrum und Lasttrum wechseln, mit einem zweiten Druck beaufschlagt ist, der größer als der erste Druck ist. Mit der Spannvorrichtung 40, die Getriebe-Kupplungseinheit 26 zugeordnet ist, kann auch im Schubumkehrfall sicher Drehmoment übertragen werden. Der hydraulische Druck, mit dem die Hydraulikzylinder 21 bzw. 42 der Spannvorrichtungen 18 und 40 versorgt werden, wird von einer Druckquelle der selbstfahrenden Erntemaschine 1 bzw. des Feldhäckslers 2 bereitgestellt.

Fig. 4 zeigt schematisch eine perspektivische Ansicht der Einzugsvorrichtung 5 mit der daran auf der rechten Maschinenseite MR angeordneten Kupplungs-Getriebeeinheit 26, der Spannvorrichtung 40 sowie der Abtriebsriemenscheibe 36 und dem Riemen 37. Auf der linken Maschinenseite ML ist die Kuppeleinrichtung 29 mit dem endseitigen Schnellkuppler 39 zu erkennen.

**Bezugszeichenliste**

| | | | |
|---|---|---|---|
| 1 | Erntemaschine | 24 | Gelenkwelle |
| 2 | Feldhäcksler | 24a | Getriebe |
| 3 | Erntegut | 25 | Riementrieb |
| 4 | Vorsatzgerät | 26 | Getriebe-Kupplungseinheit |
| 5 | Einzugsvorrichtung | 27 | Hydraulikmotor |
| 5a | Erstes Walzenpaar | 28 | Querwelle |
| 5b | Zweites Walzenpaar | 29 | Kuppeleinrichtung |
| 5c | Einzugsgehäuse | 30 | Doppelgelenk |
| 6 | Häckselvorrichtung | 31 | Eingangswelle |
| 6a | Messertrommel | 32 | Getriebeanordnung |
| 6b | Messertrommelwelle | 33 | Antriebsriemenscheibe |
| 7 | Konditioniereinrichtung | 34 | Kupplung |
| 8 | Auswurfbeschleuniger | 34a | Erstes Kupplungsteil |
| 8a | Förderelemente | 34b | Zweites Kupplungsteil |
| 8b | Welle | 35 | Ausgangswelle |
| 9 | Antriebsmotor | 36 | Abtriebsriemenscheibe |
| 10 | Überladeeinrichtung | 37 | Riemen |
| 11 | Verteilergetriebe | 38 | Eingangsgetriebe |
| 12 | Abtriebsriemenscheibe | 39 | Schnellkuppler |
| 13 | Kupplung | 40 | Spannvorrichtung |
| 14 | Hydraulikpumpe | 41 | Spannrolle |
| 14a | Hydraulikpumpe | 42 | Hydraulikzylinder |
| 15 | Hauptantriebsriemen | 50 | Antriebssystem |
| 15a | Unterseite von 15 | | |
| 15b | Oberseite von 15 | FR | Fahrrichtung |
| 16 | Hauptriemenscheibe | ML | Linke Maschinenseite |
| 17 | Riemenscheibe | MR | Rechte Maschinenseite |
| 18 | Spannvorrichtung | | |
| 19 | Spannrolle | | |
| 20 | Achse | | |
| 21 | Hydraulikzylinder | | |
| 22 | Hydraulikmotor | | |
| 23 | Getriebe | | |

## Patentansprüche

1. Antriebssystem (50) für eine selbstfahrende Erntemaschine (1, 2), umfassend einen Antriebsmotor (9), ein von dem Antriebsmotor (9) angetriebenes Verteilergetriebe (11) mit einer an einer Antriebswelle des Verteilergetriebes (11) angeordneten Abtriebsriemenscheibe (12), welche mittels eines Hauptantriebsriemens (15) zumindest eine endseitig auf einer Messertrommelwelle (6b) angeordnete Hauptriemenscheibe (16) einer rotierenden Messertrommel (6a) antreibt, und mindestens eine von dem Antriebsmotor (9) angetriebene Hydraulikpumpe (14, 14a) zum hydraulischen Antreiben eines Vorsatzgerätes (4) und/oder einer Einzugsvorrichtung (5), wobei der Messertrommelwelle (6b) auf der der Hauptriemenscheibe (16) gegenüberliegenden Seite endseitig eine Getriebe-Kupplungseinheit (26) zugeordnet ist, **dadurch gekennzeichnet, dass** die Getriebe-Kupplungseinheit (26) dazu eingerichtet ist, das Vorsatzgerät (4) stufenlos hydraulisch oder mit diskreter Übersetzung leistungssummiert anzutreiben, wobei die Getriebe-Kupplungseinheit (26) eine achsparallel zur Messertrommelwelle (6b) verlaufende Querwelle (28) antreibt, und die Querwelle (28) mit einer auf der Seite der Hauptriemenscheibe (16) befindlichen Kuppeleinrichtung (29) für den Antrieb des Vorsatzgerätes (4) trieblich verbunden ist.

2. Antriebssystem (50) nach Anspruch 1, **dadurch gekennzeichnet, dass** die Getriebe-Kupplungseinheit (26) durch zumindest einen Hydraulikmotor (27) angetrieben ist, welcher durch die mindestens eine Hydraulikpumpe (14, 14a) antreibbar ist.

3. Antriebssystem (50) nach Anspruch 1 oder 2, **dadurch gekennzeichnet, dass** die Getriebe-Kupplungseinheit (26) eine Getriebeanordnung (32) sowie eine Antriebsriemenscheibe (33) mit einer in die Antriebsriemenscheibe (33) integrierten Kupplung (34) aufweist.

4. Antriebssystem (50) nach Anspruch 3, **dadurch gekennzeichnet, dass** die Getriebeanordnung (32) als Stirnradgetriebe und/oder Stirnradwinkelgetriebe und die Kupplung (34) als Reibkupplung oder als formschlüssige Kupplung ausgeführt ist.

5. Antriebssystem (50) nach Anspruch 3 oder 4, **dadurch gekennzeichnet, dass** die Getriebeanordnung (32) auf der Messertrommelwelle (6b) gelagert ist.

6. Antriebssystem (50) nach einem der Ansprüche 3 bis 5, **dadurch gekennzeichnet, dass** der zumindest eine Hydraulikmotor (27) durch ein Doppelgelenk (30) mit der Getriebeanordnung (32) verbunden ist.

7. Antriebssystem (50) nach einem der vorangehenden Ansprüche, **dadurch gekennzeichnet, dass** auf der Querwelle (28) endseitig eine Abtriebsriemenscheibe (36) angeordnet ist, welche durch einen Riemen (37) mit der Antriebsriemenscheibe (33) der Getriebe-Kupplungseinheit (26) verbunden ist.

8. Antriebssystem (50) nach Anspruch 7, **dadurch gekennzeichnet, dass** der Riemen (37) durch eine Spannvorrichtung (40) mit veränderbarer Spannung vorgespannt ist.

9. Antriebssystem (50) nach Anspruch 8, **dadurch gekennzeichnet, dass** die Spannvorrichtung (40) eine mittels eines Aktors, insbesondere eines Hydraulikzylinders (42), mit einer Kraft beaufschlagbare Spannrolle (41) umfasst, die gegen den Riemen (37) gedrückt wird.

10. Antriebssystem (50) nach einem der vorangehenden Ansprüche, **dadurch gekennzeichnet, dass** die Querwelle (28) und die Kuppeleinrichtung (29) durch ein auf der Seite der Hauptriemenscheibe (16) befindliches Eingangsgetriebe (38) miteinander verbunden sind.

11. Antriebssystem (50) nach einem der vorangehenden Ansprüche, **dadurch gekennzeichnet, dass** die Getriebe-Kupplungseinheit (26) in einem drehzahlvariablen Modus betreibbar ist, in welchem die Kupplung (34) geöffnet ist, so dass der Antrieb des Vorsatzgerätes (4) durch den zumindest einen Hydraulikmotor (27) erfolgt.

12. Antriebssystem (50) nach einem der vorangehenden Ansprüche, **dadurch gekennzeichnet, dass** die Getriebe-Kupplungseinheit (26) in einem leistungssummierten Modus betreibbar ist, in welchem die Kupplung (34) geschlossen ist, so dass der Antrieb des Vorsatzgerätes (4) mechanisch mittels der Messertrommelwelle (6b) und durch den zumindest einen Hydraulikmotor (27) erfolgt.

13. Antriebssystem (50) nach einem der vorangehenden Ansprüche, **dadurch gekennzeichnet, dass** die Getriebe-Kupplungseinheit (26) in einem Reversiermodus betreibbar ist, in welchem die Kupplung (34) geöffnet und die Drehrichtung des zumindest einen Hydraulikmotor (27) invertiert ist.

14. Antriebssystem (50) nach Anspruch 13, **dadurch gekennzeichnet, dass** der Hydraulikzylinder (42) der Spannvorrichtung (40) im drehzahlvariablen Modus und im leistungssummierten Modus mit einem ersten Druck beaufschlagt ist, während der Hydraulikzylinder (42) im Reversiermodus oder während eines Bremsvorganges, in welchen am Riemen (37) Leertrum und Lasttrum wechseln, mit einem zweiten Druck beaufschlagt ist, der größer als der erste Druck ist.

15. Selbstfahrende Erntemaschine (1), insbesondere Feldhäcksler (2), mit einem Antriebssystem (50) nach einem der Ansprüche 1 bis 14.

## Claims

1. A drive system (50) for a self-propelled harvesting machine (1, 2), comprising a propulsion engine (9), a transfer gearbox (11) driven by the propulsion engine (9) with a driven belt pulley (12) disposed on a drive shaft of the transfer gearbox (11) and which drives at least one main belt pulley (16) of a rotating knife drum (6a) disposed on the end of a knife drum shaft (6b) by means of a main drive belt (15), and at least one hydraulic pump (14, 14a) driven by the propulsion engine (9) in order to drive a front attachment (4) and/or a feeder device (5) hydraulically, wherein a gear and clutch unit (26) is associated with the knife drum shaft (6b) on the side opposite to the main belt pulley (16), **characterized in that** the configuration of the gear and clutch unit (26) is such as to drive the front attachment (4) in a continuously variable hydraulic manner or in power summation with a discrete gear ratio, wherein the gear and clutch unit (26) drives a transverse shaft (28) which runs parallel to the axis of the knife drum shaft (6b), and the transverse shaft (28) is operatively connected to a clutch means (29) located on the main belt pulley (16) side in order to drive the front attachment (4).

2. The drive system (50) according to claim 1, **characterized in that** the gear and clutch unit (26) is driven by at least one hydraulic motor (27) which can be driven by the at least one hydraulic pump (14, 14a).

3. The drive system (50) according to claim 1 or claim 2, **characterized in that** the gear and clutch unit (26) has a gear assembly (32) as well as a drive belt pulley (33) with a clutch (34) which is integrated into the drive belt pulley (33).

4. The drive system (50) according to claim 3, **characterized in that** the gear assembly (32) is configured as a spur gear and/or angular spur gear and the clutch (34) is configured as a friction clutch or as an interlocking clutch.

5. The drive system (50) according to claim 3 or claim 4, **characterized in that** the gear assembly (32) is mounted on the knife drum shaft (6b).

6. The drive system (50) according to one of claims 3 to 5, **characterized in that** the at least one hydraulic motor (27) is connected to the gear assembly (32) by means of a constant velocity joint (30).

7. The drive system (50) according to one of the preceding claims, **characterized in that** a driven belt pulley (36) is disposed on the end of the transverse shaft (28) and is connected to the drive belt pulley (33) of the gear and clutch unit (26) by means of a belt (37).

8. The drive system (50) according to claim 7, **characterized in that** the belt (37) is tensioned with a variable tension by means of a tensioning device (40).

9. The drive system (50) according to claim 8, **characterized in that** the tensioning device (40) comprises a tensioning roller (41) to which a force can be applied by means of an actuator, in particular a hydraulic cylinder (42), which is pressed against the belt (37).

10. The drive system (50) according to one of the preceding claims, **characterized in that** the transverse shaft (28) and the clutch means (29) are connected together by means of an input gearbox (38) which is located on the side of the main belt pulley (16).

11. The drive system (50) according to one of the preceding claims, **characterized in that** the gear and clutch unit (26) can be operated in a variable speed mode in which the clutch is disengaged, so that the drive for the front attachment (4) is generated by the at least one hydraulic motor (27).

12. The drive system (50) according to one of the preceding claims, **characterized in that** the gear and clutch unit (26) can be operated in a power summation mode in which the clutch (34) is engaged, so that the drive for the front attachment (4) is generated mechanically by means of the knife drum shaft (6b) and by the at least one hydraulic motor (27).

13. The drive system (50) according to one of the preceding claims, **characterized in that** the gear and clutch unit (26) can be operated in a reverse mode in which the clutch (34) is disengaged and the direction of rotation of the at least one hydraulic motor (27) is reversed.

14. The drive system (50) according to claim 13, **characterized in that** a pressure can be applied to the hydraulic cylinder (42) of the tensioning device (40) in the variable speed mode and in the power summation mode, while in the reverse mode or during a braking procedure in which the slack side and the tight side of the belt (37) are exchanged, a second pressure is applied to the hydraulic cylinder (42) which is greater than the first pressure.

15. A self-propelled harvesting machine (1), in particular a forage harvester (2), with a drive system (50) according to one of claims 1 to 14.

## Revendications

1. Système d'entraînement (50) pour une machine de récolte automotrice (1, 2), incluant un moteur d'entraînement (9), un boîtier de transfert (11) entraîné par le moteur d'entraînement (9) avec une poulie menée (12) qui est disposée sur un arbre d'entraînement du boîtier de transfert (11) et qui, au moyen d'une courroie d'entraînement principale (15), entraîne une poulie principale (16) d'un tambour porte-couteaux rotatif (6a) disposé sur un arbre de tambour porte-couteaux (6b), et au moins une pompe hydraulique (14, 14a) entraînée par le moteur d'entraînement (9) pour l'entraînement hydraulique d'un outil frontal (4) et/ou d'un dispositif d'amenée (5), à l'arbre de tambour porte-couteaux (6b) étant associée sur le côté opposé à la poulie principale (16), en bout, une unité d'accouplement de transmission (26), **caractérisé en ce que** l'unité d'accouplement de transmission (26) est agencée pour entraîner l'outil frontal (4) hydrauliquement en continu ou avec une démultiplication discrète en puissance cumulée, l'unité d'accouplement de transmission (26) entraînant un arbre transversal (28) s'étendant de manière parallèle axialement à l'arbre de tambour porte-couteaux (6b), et l'arbre transversal (28) étant relié de manière motrice à un équipement d'accouplement (29) se trouvant sur le côté de la poulie principale (16) pour l'entraînement de l'outil frontal (4).

2. Système d'entraînement (50) selon la revendication 1, **caractérisé en ce que** l'unité d'accouplement de transmission (26) est entraînée par l'intermédiaire d'au moins un moteur hydraulique (27) qui est entraînable par l'intermédiaire de la au moins une pompe hydraulique (14, 14a).

3. Système d'entraînement (50) selon la revendication 1 ou 2, **caractérisé en ce que** l'unité d'accouplement de transmission (26) comporte un agencement de transmission (32) ainsi qu'une poulie d'entraînement (33) avec un accouplement (34) intégré dans la poulie d'entraînement (33).

4. Système d'entraînement (50) selon la revendication 3, **caractérisé en ce que** l'agencement de transmission (32) est conformé en engrenage à roues droites et/ou en engrenage angulaire à roues droites, et l'accouplement (34) est conformé en accouplement à friction ou en accouplement à complémentarité de formes.

5. Système d'entraînement (50) selon la revendication 3 ou 4, **caractérisé en ce que** l'agencement de transmission (32) est monté sur l'arbre de tambour porte-couteaux (6b).

6. Système d'entraînement (50) selon une des revendications 3 à 5, **caractérisé en ce que** le au moins un moteur hydraulique (27) est relié à l'agencement de transmission (32) par l'intermédiaire d'une double articulation (30).

7. Système d'entraînement (50) selon une des revendications précédentes, **caractérisé en ce que** sur l'arbre transversal (28) est disposée en bout une poulie menée (36) qui est reliée par l'intermédiaire d'une courroie (37) à la poulie menante (33) de l'unité d'accouplement de transmission (26).

8. Système d'entraînement (50) selon la revendication 7, **caractérisé en ce que** la courroie (37) est précontrainte par l'intermédiaire d'un dispositif de tension (40) à tension variable.

9. Système d'entraînement (50) selon la revendication 8, **caractérisé en ce que** le dispositif de tension (40) inclut un galet de tension (41) qui peut être soumis à une force au moyen d'un actionneur, en particulier d'un vérin hydraulique (42), et qui est plaqué contre la courroie (37).

10. Système d'entraînement (50) selon une des revendications précédentes, **caractérisé en ce que** l'arbre transversal (28) et l'équipement d'accouplement (29) sont reliés l'un à l'autre par l'intermédiaire d'une transmission d'entrée (38) se trouvant sur le côté de la poulie principale (16).

11. Système d'entraînement (50) selon une des revendications précédentes, **caractérisé en ce que** l'unité d'accouplement de transmission (26) est exploitable dans un mode à vitesse de rotation variable dans lequel l'accouplement (34) est ouvert, de sorte que l'entraînement de l'outil frontal (4) s'effectue par l'intermédiaire du au moins un moteur hydraulique (27).

12. Système d'entraînement (50) selon une des revendications précédentes, **caractérisé en ce que** l'unité d'accouplement de transmission (26) est exploitable dans un mode à puissance cumulée dans lequel l'accouplement (34) est fermé, de sorte que l'entraînement de l'outil frontal (4) s'effectue mécaniquement au moyen de l'arbre de tambour porte-couteaux (6b) par l'intermédiaire du au moins un moteur hydraulique (27).

13. Système d'entraînement (50) selon une des revendications précédentes, **caractérisé en ce que** l'unité d'accouplement de transmission (26) est exploitable dans un mode réversible dans lequel l'accouplement (34) est ouvert et le sens de rotation du au moins un moteur hydraulique (27) est inversible.

14. Système d'entraînement (50) selon la revendication 13, **caractérisé en ce que**, dans le mode à vitesse de rotation variable et dans le mode à puissance cumulée, le vérin hydraulique (42) du dispositif de tension (40) est soumis à une première pression, tandis que, dans le mode réversible ou pendant une opération de freinage lors desquels, sur la courroie (37), brin vide et brin en charge changent, le vérin hydraulique (42) est soumis à une seconde pression qui est supérieure à la première pression.

15. Machine de récolte automotrice (1), en particulier ensileuse (2), comprenant un système d'entraînement (50) selon une des revendications 1 à 14.
